(19) Europäisches Patentamt
European Patent Office
Office européen des brevets

(11) EP 2 196 388 A1

(12) EUROPEAN PATENT APPLICATION
published in accordance with Art. 153(4) EPC

(43) Date of publication:
16.06.2010 Bulletin 2010/24

(51) Int Cl.:
B63B 49/00 (2006.01)          G06T 1/00 (2006.01)
G06T 3/00 (2006.01)          H04N 7/18 (2006.01)

(21) Application number: 09804827.5

(22) Date of filing: 26.06.2009

(86) International application number:
PCT/JP2009/061677

(87) International publication number:
WO 2010/016340 (11.02.2010 Gazette 2010/06)

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 07.08.2008 JP 2008203735

(71) Applicant: Sanyo Electric Co., Ltd.
Osaka 570-8677 (JP)

(72) Inventor: ISHII, Yohei
Moriguchi-shi
Osaka 570-8677 (JP)

(74) Representative: Glawe, Delfs, Moll
Patent- und Rechtsanwälte
Postfach 26 01 62
80058 München (DE)

(54) MANEUVER SUPPORT APPARATUS

(57) Each of cameras C_1 to C_4 is installed at a different position of an upper portion of a ship so as to have a visual field spanning a deck and a water surface. A CPU 12p combines four object scene images outputted from the cameras C_1 to C_4 with reference to a referential height. The ship 100 has a width that decreases with an increase in height, and the CPU 12p multiplexes the graphic image corresponding to the height larger than the referential height onto the whole-circumference bird's eye view image created by the combining processing. The CPU 12p further outputs one portion of the whole-circumference bird's eye view image onto which the graphic image is multiplexed toward the display device 16 as a ship-maneuvering assisting image. The CPU 12p moreover changes the magnitude of the referential height in response to height changing instruction.

FIG.1

**Description**

**TECHNICAL FIELD**

The present invention relates to a maneuvering assisting apparatus. More specifically, the present invention relates to a maneuvering assisting apparatus which combines a plurality of bird's eye view images based on outputs from a plurality of cameras installed at an upper portion of a moving object with reference to a referential height, and outputs a combined image thus generated from a display.

**BACKGROUND ART**

One example of this type of an apparatus is disclosed in a patent literature 1. According to the background art, two cameras each partially capturing a common visual field in a left front direction are installed at a front portion and a left side of a vehicle. Outputted images from these cameras are transformed into bird's eye view images, and these images are combined to create a combined image including a common visual field image.

**CITATION LIST**

**PATENT LITERATURE**

Patent Literature1: Japanese Patent Application Laid-open Number 2008-48345

**SUMMARY OF INVENTION**

**TECHNICAL PROBLEM**

However, the background art is not based on the assumption that bird's eye view images of object scenes captured in a visual field spanning a moving object and an outside world are combined, and there is a limit to the quality of the combined image based on the bird's eye view images.

**SOLUTION TO PROBLEM**

A maneuvering assisting apparatus according to this invention comprises: a plurality of cameras each of which is installed at a different position of an upper portion of a moving object so as to have a visual field spanning the moving object and an outside world; a combiner which combines a plurality of object scene images respectively outputted from the plurality of cameras with reference to a referential height; a displayer which performs display processing on a combined image created by the combiner; and a changer which change a magnitude of the referential height in response to a height changing instruction.

Preferably, the moving object has a width that decreases with an increase in height, further comprised is a multiplexer which multiplexes a graphic image of the moving object corresponding to a height larger than the referential height onto the combined image created by the combiner, and the displayer executes the displaying processing after the multiplexing processing by the multiplexer.

Preferably, the combiner includes a transformer which transforms the plurality of object scene images into a plurality of bird's eye view images corresponding to the referential height.

More preferably, a visual field of each of the plurality of cameras has a common visual field, and the combiner further includes a connector which connects the plurality of bird's eye view images transformed by the transformer so as to be overlapped at the common visual fields.

Preferably, further comprised are: a first detector which detects at least one of a moving velocity of the moving object and a magnitude of a rock of the moving object; and a first issuer which issues the height changing instruction with reference to a detection result by the first detector.

Preferably, the moving object is equivalent to a ship, a visual field of each of the plurality of cameras spans a deck of the ship and a water surface, and the changer changes a magnitude of the referential height among a plurality of magnitudes including a magnitude corresponding to the deck and a magnitude corresponding to the water surface.

More preferably, further comprised are: a second detector which detects a height of a pier when the ship performs landing/leaving steering; and a second issuer which issues the height changing instruction with reference to a detection result by the second detector.

A maneuvering assisting program product according to this invention is a maneuvering assisting program product to be executed by a processor of a maneuvering assisting apparatus having a plurality of cameras each of which is installed at a different position of an upper portion of a moving object so as to have a visual field spanning the moving object and an outside world, and comprises: a combining step of combining a plurality of object scene images respectively outputted from the plurality of cameras with reference to a referential height; a displaying step of performing display processing on a combined image created by the combining step; and a changing step of changing a magnitude of the referential height in response to a height changing instruction.

A maneuvering assisting method according to this invention is a maneuvering assisting method to be executed by a maneuvering assisting apparatus having a plurality of cameras each of which is installed at a different position of an upper portion of a moving object so as to have a visual field spanning the moving object and an outside world, and comprises: a combining step of combining a plurality of object scene images respectively outputted from the plurality of cameras with reference to a referential height; a displaying step of performing display processing on a combined image created by the combining step; and a changing step of changing a magnitude of the referential height in response to a height changing instruction.

The above described objects and other objects, features and advantages of the present invention will become more apparent from the following detailed description when taken in conjunction with the accompanying drawings.

## BRIEF DESCRIPTION OF THE DRAWINGS

[FIG.1]Figure 1 is a block diagram showing a configuration of one embodiment of the present invention.

[FIG.2] (A) is an illustrative view showing a state that a ship is viewed from front, and (B) is an illustrative view showing a state that the ship is viewed from rear.

[FIG.3] (A) is an illustrative view showing a state that a ship is viewed from a lateral side, and (B) is an illustrative view showing a state that the ship is viewed from above. [FIG.4] Figure 4 is an illustrative view showing one example of visual fields captured by a plurality of cameras attached to a ship.

[FIG.5] (A) is an illustrative view showing one example of a bird's eye view image based on output of a front camera, (B) is an illustrative view showing one example of a bird's eye view image based on output of a right camera, (C) is an illustrative view showing one example of a bird's eye view image based on output of a left camera, and (D) is an illustrative view showing one example of a bird's eye view image based on output of a rear camera.

[FIG.6] Figure 6 is an illustrative view showing one example of a whole-circumference bird's eye view image based on the bird's eye view images shown in Figure 5(A) to Figure 5(D).

[FIG.7] (A) is an illustrative view showing one example of a ship-maneuvering assisting image displayed by a display device, and (B) is an illustrative view showing another example of a ship-maneuvering assisting image displayed by the display device.

[FIG.8] (A) is an illustrative view showing one example of a ship-maneuvering assisting image to be displayed during steering for landing, (B) is an illustrative view showing another example of a ship-maneuvering assisting image to be displayed during steering for landing, (C) is an illustrative view showing one example of a ship-maneuvering assisting image to be displayed after steering for landing, and (D) is an illustrative view showing another example of a ship-maneuvering assisting image to be displayed after steering for landing.

[FIG.9] Figure 9 is an illustrative view showing an angle of a camera attached to the ship.

[FIG.10] Figure 10 is an illustrative view showing a relationship among a camera coordinate system, a coordinate system on an imaging surface, and a world coordinate system.

[FIG.11] Figure 11 is a flowchart showing one portion of an operation of a CPU applied to the embodiment in Figure 1.

[FIG.12] Figure 12 is a flowchart showing another portion of the operation of the CPU applied to the embodiment in Figure 1.

[FIG.13] Figure 13 is a block diagram showing a configuration of another embodiment. [FIG.14] Figure 14 is a flowchart showing one portion of an operation of a CPU applied to the embodiment in Figure 13.

[FIG.15] (A) is an illustrative view showing a state where another ship is viewed from a lateral side, and (B) is an illustrative view showing a state where this another ship is viewed from above.

[FIG.16] Figure 16 is an illustrative view showing one example of visual fields captured by a plurality of cameras attached to this another ship.

[FIG.17] Figure 17 is a block diagram showing a configuration of a still another embodiment.

[FIG.18] Figure 18 is a flowchart showing one portion of an operation of a CPU applied to the embodiment in Figure 17.

## DESCRIPTION OF EMBODIMENTS

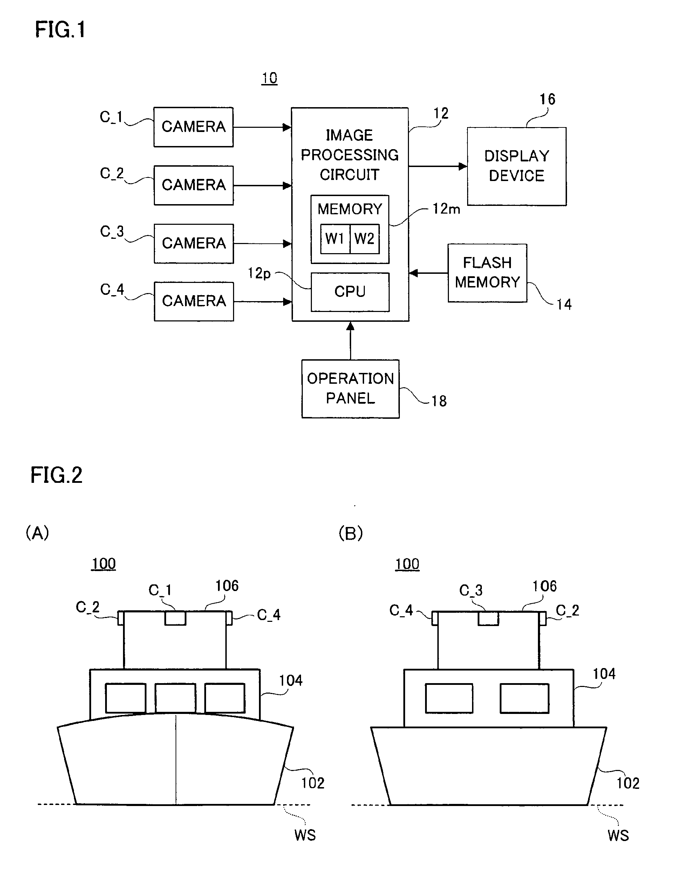

A ship-maneuvering assisting apparatus 10 of this embodiment shown in Figure 1 includes four cameras C_1 to C_4. The cameras C_1 to C_4 output object scene images P_1 to P_4 in synchronization with a common timing signal at every 1/30 seconds, respectively. The outputted object scene images P_1 to P_4 are fetched by an image processing circuit 12.

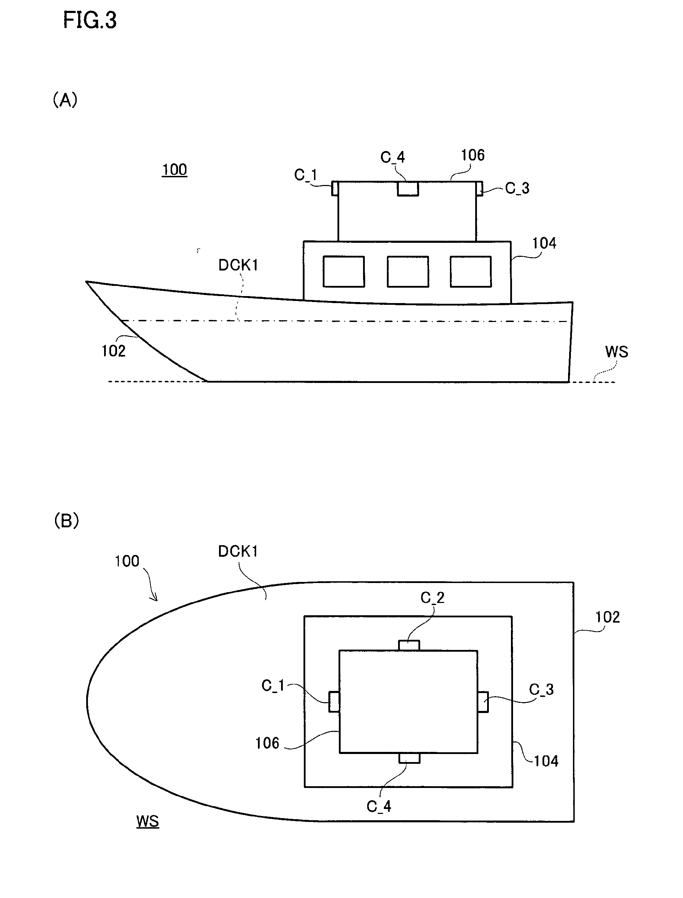

The ship-maneuvering assisting apparatus 10 is loaded in a ship 100 shown in Figure 2(A) and Figure 2(B), and Figure 3(A) and Figure 3(B). Roughly, the ship 100 is configured by a ship hull 102, a cabin 104, and a navigation bridge 106. The cabin 104 is formed in a box shape at a substantially center of a top surface of the ship hull 102, and the navigation bridge 106 is formed in a box shape at a top-surface center of the cabin 104. A width of the cabin 104 is smaller than that of the top surface of the ship hull 102, and a width of the navigation bridge 106 is also smaller than that of the cabin 104. Thus, the ship 100 has a width that decreases with an increase in height.

The camera C_1 is installed at an upper end center of an outer peripheral front surface of the navigation bridge 106, and the camera C_2 is installed at an upper end center of an outer peripheral right side surface of the navigation bridge 106. Moreover, the cameraC_3 is installed at an upper end center of an outer peripheral rear surface of the navigation bridge 106, and the cameraC_4 is installed at an upper end center of an outer peripheral left side surface of the navigation bridge 106. An optical axis of the camera C_1 extends obliquely downward forward of the navigation bridge 106, and an optical axis of the camera C_2 extends obliquely downward rightward of the ship 106. Moreover, an optical axis of the camera C_3 extends obliquely downward rearward of navigation bridge 106, and an optical axis of the camera C_4 extends obliquely downward leftward of the ship 100.

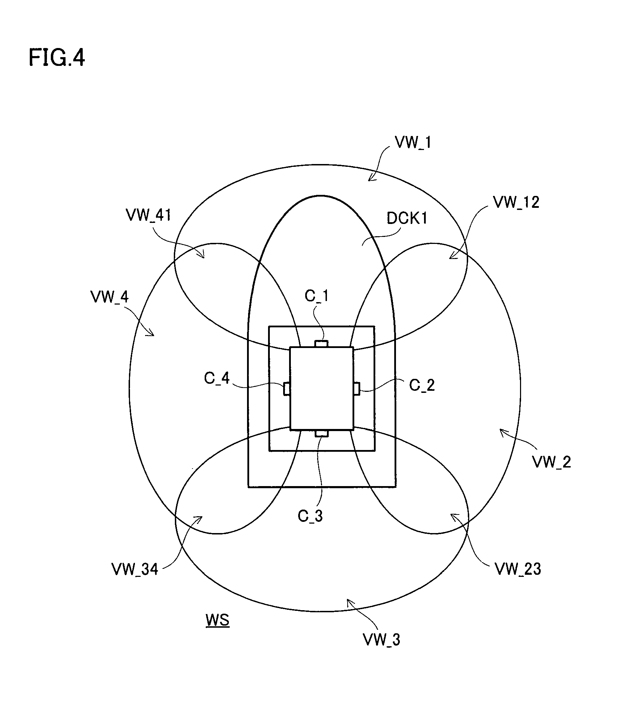

Referring to Figure 4, the camera C_1 has a visual field VW_1 capturing a front side of the navigation bridge 106, the camera C_2 has a visual field VW_2 capturing a right side of the navigation bridge 106, the camera C_3 has a visual field VW_3 capturing a rear side of the navigation bridge 106, and the camera C_4 has a visual field VW_4 capturing a left side of the navigation bridge 106. Furthermore, the visual fields VW_1 and VW_2 have a common visual field VW_12, the visual fields VW_2 and VW_3 have a common visual field VW_23, the visual fields VW_3 and VW_4 have a common visual field VW_34, and the visual fields VW_4 and VW_1 have a common visual field VW_41.

The visual field VW_1 includes a front portion of a deck DCK1 and a water surface (sea surface) WS forward of the ship 100, the visual field VW_2 includes a right portion of the deck DCK1 and the water surface WS rightward of the ship 100. Furthermore, the visual field VW_3 includes a rear portion of the deck DCK1 and the water surface WS rearward of the ship 100, and the visual field VW_4 includes a left portion of the deck DCK1 and the water surface WS leftward of the ship 100. In other words, a situation of the deck DCK1 and a situation of the water surface WS around the ship 100 is comprehended by the cameras C_1 to C_4.

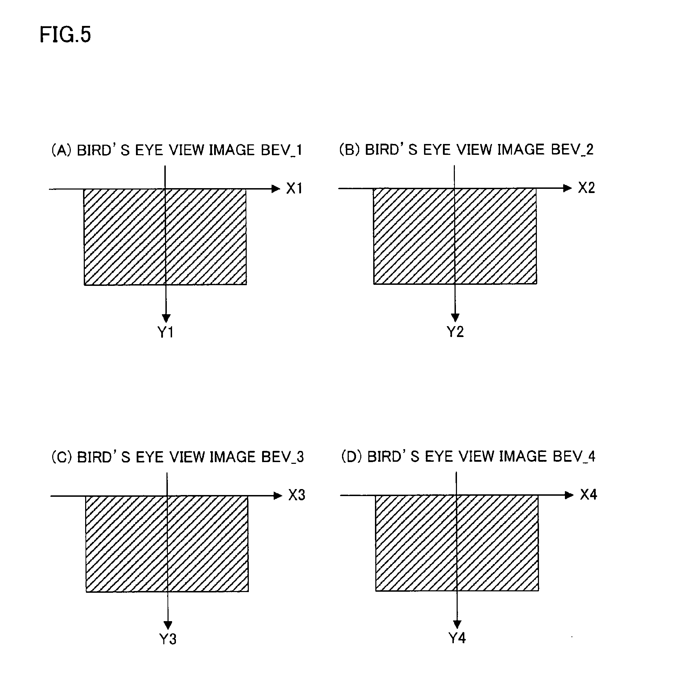

Returning to Figure 1, a CPU 12p arranged in the image processing circuit 12 produces a bird's eye view image BEV_1 shown in Figure 5(A) based on the object scene image P_1 outputted from the camera C_1, and produces a bird's eye view image BEV_2 shown in Figure 5(B) based on the object scene image P_2 outputted from the camera C_2. The CPU 12p further produces a bird's eye view image BEV_3 shown in Figure 5(C) based on the object scene image P_3 outputted from the camera C_3, and a bird's eye view image BEV_4 shown in Figure 5(D) based on the object scene image P_4 outputted from the camera C_4.

The bird's eye view image BEV_1 is equivalent to an image captured by a virtual camera looking down on the visual field VW_1 in a perpendicular direction, and the bird's eye view image BEV_2 is equivalent to an image captured by a virtual camera looking down on the visual field VW_2 in a perpendicular direction. Moreover, the bird's eye view image BEV_3 is equivalent to an image captured by a virtual camera looking down on the visual field VW_3 in a perpendicular direction, and the bird's eye view image BEV_4 is equivalent to an image captured by a virtual camera looking down on the visual field VW_4 in a perpendicular direction.

According to Figure 5(A) to Figure 5(D), the bird's eye view image BEV_1 has a bird's eye view coordinate system X1·Y1, the bird's eye view image BEV_2 has a bird's eye view coordinate system X2·Y2, the bird's eye view image BEV_3 has a bird's eye view coordinate system X3·Y3, and the bird's eye view image BEV_4 has a bird's eye view coordinate system X4·Y4.

When each of the bird's eye view images BEV_1 to BEV_4 is created, a referential height designated by an operation with an operation panel 18 is refereed. That is, when the operation panel 18 is operated, a height changing instruction onto which a desired height is described is issued, and the CPU 12p creates each of the bird's eye view images BEV_1 to BEV_4 regarding the height described in the height changing instruction as a referential height.

As described above, each of the visual fields VW_1 to VW4 includes an object which exists in heights different from one another, such as the deck DCK1 and the water surface WS. In a case that the height of the deck DCK1 is designated as a referential height, the bird's eye view images BEV_1 to BEV_4 are created based on an assumption that the surface of the deck DCK1 is an origin in the height direction (origin Ow described later). On the contrary thereto, in a case that the height of the water surface WS is designated as a referential height, the bird's eye view images BEV_1 to BEV_4 are created based on an assumption that the water surface WS is an origin in the height direction. The bird's eye view images BEV_1 to BEV_4 thus created are held in a work area W1 of a memory 12m.

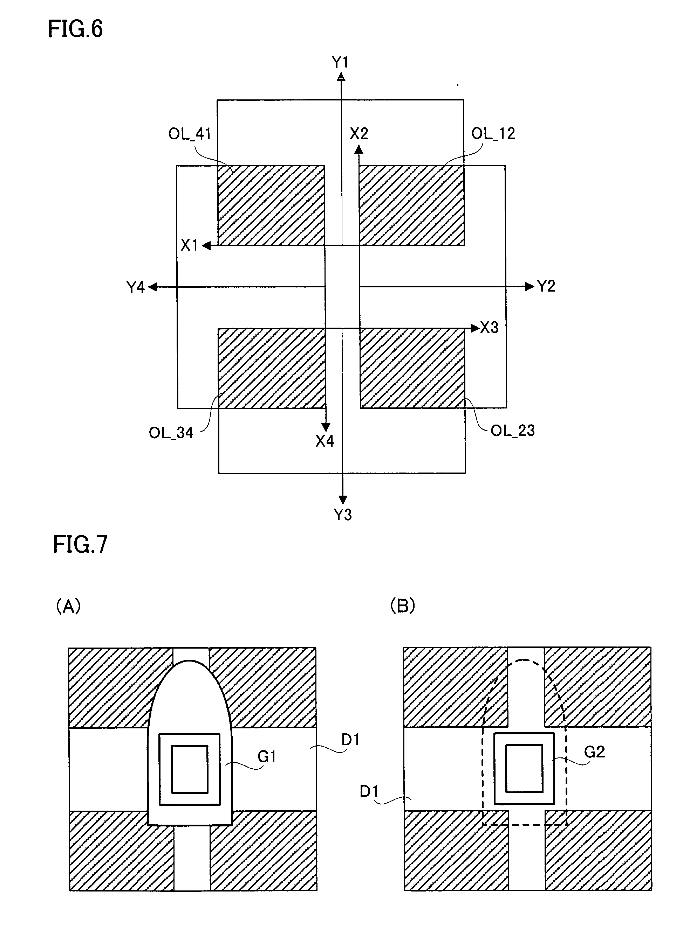

Subsequently, the CPU 12p combines the bird's eye view images BEV_1 to BEV_4 with each other through a coordinate transformation. The bird's eye view images BEV_2 to BEV_4 are rotated and/or moved by using the bird's eye view image BEV_1 as a reference. As a result, a whole-circumference bird's eye view image shown in Figure 6 is obtained in a work area W2 of the memory 12m.

In Figure 6, an overlapping area OL_12 is equivalent to an area in which the common visual field VW_12 is reproduced, and an overlapping area OL_23 is equivalent to an area in which the common visual field VW_23 is reproduced. Moreover, an overlapping area OL_34 is equivalent to an area in which the common visual field VW_34 is reproduced, and an overlapping area OL_41 is equivalent to an area in which the common visual field VW_41 is reproduced.

Thereafter, the CPU 12p multiplexes a graphic image G1 or G2 that imitates an upper portion of the ship 100 onto a center of the whole-circumference bird's eye view image on the work area W2, and cuts out one portion of an image in which the overlapping areas OL_12 to OL_41 are positioned at four corners. The cut-out image is applied to the display device 16 set in the navigation bridge 106 as a ship-maneuvering assisting image. When the graphic image G1 is multiplexed, a ship-maneuvering assisting image shown in Figure 7(A) is outputted from the display device 16, and when the graphic image G2 is multiplexed, a ship-maneuvering assisting image shown in Figure 7(B) is outputted from the display device 16.

The graphic image G1 is equivalent to an image that imitates the ship hull 102 (that is, the deck DCK1, the cabin 104 and the navigation bridge 106) from above. Furthermore, the graphic image G2 is equivalent to an image that imitates only the cabin 104 and the navigation bridge 106 from above. The graphic image G1 is selected when the referential height set by the operation panel 18 is lower than the height of the deck DCK1, and the graphic image G2 is selected when the referential height set by the operation panel 18 is equal to or higher than the height of the deck DCK1.

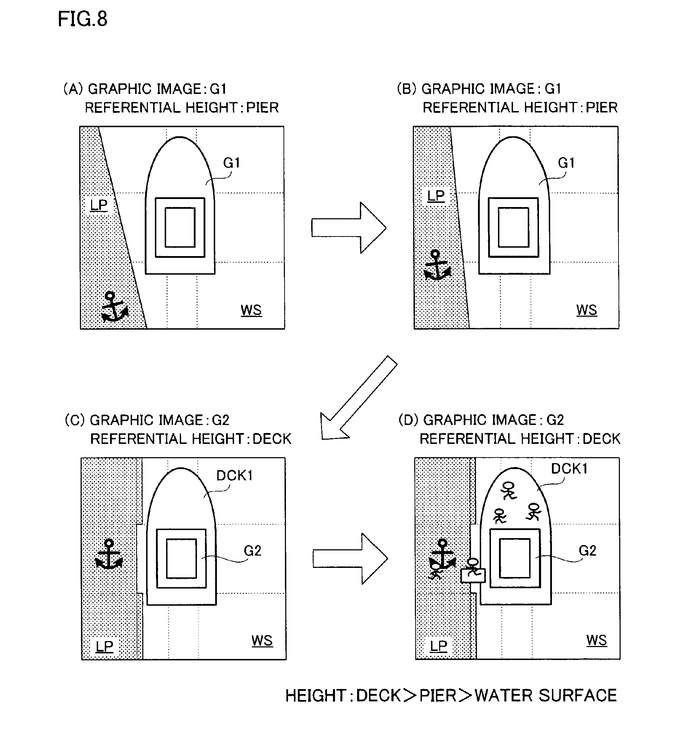

When the ship 100 lands a pier LP, the ship-maneuvering assisting image changes in a manner shown in Figure 8(A) to Figure 8(D). Here, an assumption is made that the height decreases from the deck DCK1→the pier LP→the water surface WS in this order, and that the height of the pier LP is taken as a referential height during steering for landing whereas the height of the deck DCK1 is taken as a referential height after landing.

While steering is being made, the graphic image G1 is displayed at the center of the monitor screen, and actual images representing the pier LP and the water surface WS are displayed around the graphic image G1 (see Figure 8 (A) to Figure 8(B)). The actual image representing the pier LP is close to the graphic image G1 in accordance with the steering. Here, the referential height during steering is conformed to the height of the pier LP, so that a displacement occurs at a combined section of the actual images representing the water surface WS.

When the ship 100 lands the pier LP, the graphic image G1 is updated by the graphic image G2, and actual images representing the deck DCK1, the pier LP and the water surface WS are displayed around the graphic image G2 (see Figure 8(C) to Figure 8(D)). Here, the referential height after landing is conformed to the height of the deck DCK1, so that displacements occur at a combined section of the actual images representing the pier LP and a combined section of the actual images representing the water surface WS.

The bird's eye view images BEV_1 to BEV_4 are created according to the following procedure. It is noted that because each of the bird's eye view images BEV_1 to BEV_4 is created according to the same procedure, a procedure for creating the bird's eye view image BEV_3 is described as a representative example of the procedure for creating the bird's eye view images BEV_1 to BEV_4.

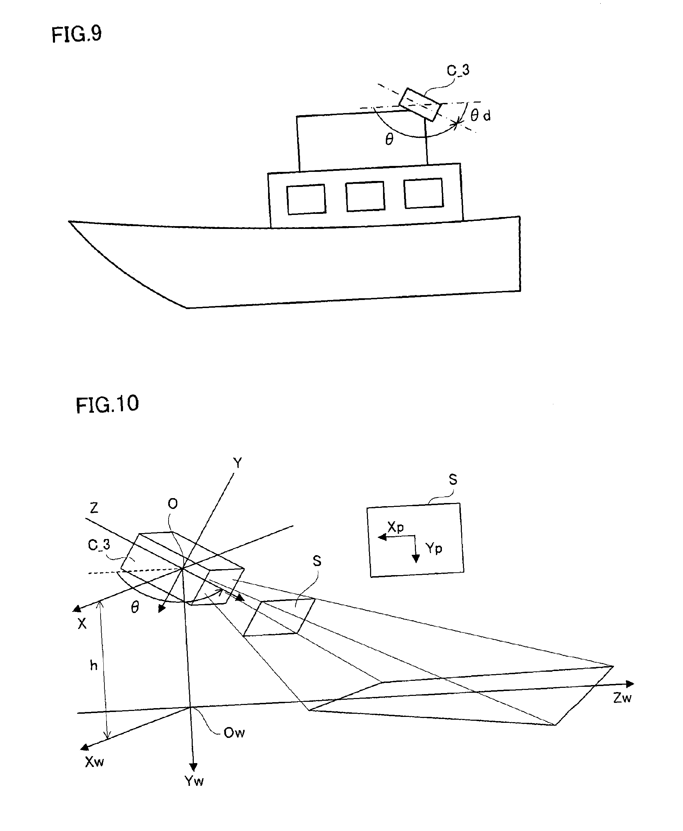

With reference to Figure 9, the camera C_3 is placed, obliquely downward rearward, at an upper end center of a rear surface of the navigation bridge 106. If an angle of depression of the camera C_3 is assumed as "θd", an angle θ shown in Figure 8 is equivalent to "180 degrees-θd". Furthermore, the angle θ is defined in a range of 90 degrees<θ<180 degrees.

Figure 9 shows a relationship among a camera coordinate system X·Y·Z, a coordinate system Xp·Yp on an imaging surface S of the camera C_3, and a world coordinate system Xw·Yw·Zw. The camera coordinate system X·Y·Z is a three-dimensional coordinate system having an X axis, Y axis, and Z axis as coordinate axes. The coordinate system Xp·Yp is a two-dimensional coordinate system having an Xp axis and Yp axis as coordinate axes. The world coordinate system Xw·Yw·Zw is a three-dimensional coordinate system having an Xw axis, Yw axis, and Zw axis as coordinate axes.

In the camera coordinate system X·Y·Z, an optical center of the camera C3 is an origin O. In this state, the Z axis is defined in an optical axis direction, the X axis is defined in a direction orthogonal to the Z axis and parallel to the ground, and the Y axis is defined in a direction orthogonal to the Z axis and X axis. In the coordinate system Xp·Yp of the imaging surface S, a center of the imaging surface S is an origin. In this state, the Xp axis is defined in a lateral direction of the imaging surface S and the Yp axis is defined in a vertical direction of the imaging surface S.

In the world coordinate system Xw·Yw·Zw, an intersecting point between a perpendicular line passing through the origin O of the camera coordinate system X·Y· Z and the referential height face is an origin Ow. In this state, the Yw axis is defined in a direction vertical to the referential height face, the Xw axis is defined in a direction parallel to the X axis of the camera coordinate system X·Y·Z, and the Zw axis is defined in a direction orthogonal to the Xw axis and Yw axis. Also, a distance from the Xw axis to the X axis is "h", and an obtuse angle formed by the Zw axis and Z axis is equivalent to the above described angle θ.

When coordinates in the camera coordinate system X·Y·Z are written as (x, y, z), "x", "y", and "z" respectively indicate an X-axis component, a Y-axis component, and a Z-axis component in the camera coordinate system X·Y·Z.

When coordinates in the coordinate system Xp·Yp on the imaging surface S are written as (xp, yp), "xp" and "yp" respectively indicate an Xp-axis component and a Yp-axis component in the coordinate system Xp·Yp on the imaging surface S. When coordinates in the world coordinate system Xw·Yw·Zw are written as (xw, yw, zw), "xw", "yw", and "zw" respectively indicate an Xw-axis component, a Yw-axis component, and a Zw-axis component in the world coordinate system Xw·Yw·Zw.

A transformation equation for transformation between the coordinates (x, y, z) of the camera coordinate system X·Y·Z and the coordinates (xw, yw, zw) of the world coordinate system Xw·Yw·Zw is represented by Equation 1 below:

[Equation 1]

$$\begin{bmatrix} x \\ y \\ z \end{bmatrix} = \begin{bmatrix} 1 & 0 & 0 \\ 0 & \cos\theta & -\sin\theta \\ 0 & \sin\theta & \cos\theta \end{bmatrix} \left\{ \begin{bmatrix} xw \\ yw \\ zw \end{bmatrix} + \begin{bmatrix} 0 \\ h \\ 0 \end{bmatrix} \right\}$$

Herein, if a focal length of the camera C_3 is assumed as "f", a transformation equation for transformation between the coordinates (xp, yp) of the coordinate system Xp·Yp on the imaging surface S and the coordinates (x, y, z) of the camera coordinate system X·Y·Z is represented by Equation 2 below:

[Equation 2]

$$\begin{bmatrix} xp \\ yp \end{bmatrix} = \begin{bmatrix} f\dfrac{x}{z} \\ f\dfrac{y}{z} \end{bmatrix}$$

Furthermore, based on Equation 1 and Equation 2, Equation 3 is obtained. Equation 3 shows a transformation equation for transformation between the coordinates (xp, yp) of the coordinate system Xp·Yp on the imaging surface S and the coordinates (xw, zw) of the two-dimensional ground coordinate system Xw·Zw.

[Equation 3]

$$\begin{bmatrix} xp \\ yp \end{bmatrix} = \begin{bmatrix} \dfrac{fxw}{h\sin\theta + zw\cos\theta} \\ \dfrac{(h\cos\theta - zw\sin\theta)f}{h\sin\theta + zw\cos\theta} \end{bmatrix}$$

Furthermore, a bird's eye view coordinate system X3·Y3 of coordinate system of the bird's eye view image BEV_3 shown in Figure 5(C) is defined. The bird's eye view coordinate system X3·Y3 is a two-dimensional coordinate system having an X3 axis and Y3 axis as coordinate axes. When coordinates in the bird's eye view coordinate system X3·Y3 are written as (x3, y3), a position of each pixel forming the bird's eye view image BEV_3 is represented by coordinates (x3, y3). "x3" and "y3" respectively indicate an X3-axis component and a Y3-axis component in the bird's eye view coordinate system X3·Y3.

A projection from the two-dimensional coordinate system Xw·Zw that represents the referential height face onto the bird's eye view coordinate system X3·Y3 is equivalent to a so-called parallel projection. When a height of a virtual camera, i.e., a height of a virtual view point, is assumed as "H", a transformation equation for transformation between the coordinates (xw, zw) of the two-dimensional coordinate system Xw·Zw and the coordinates (x3, y3) of the bird's eye view coordinate system X3·Y3 is represented by Equation 4 below. A height H of the virtual camera is previously determined.

[Equation 4]

$$
\begin{bmatrix} x3 \\ y3 \end{bmatrix} = \frac{f}{H} \begin{bmatrix} xw \\ zw \end{bmatrix}
$$

Further, based on Equation 4, Equation 5 is obtained, and based on Equation 5 and Equation 3, Equation 6 is obtained. Moreover, based on Equation 6, Equation 7 is obtained. Equation 7 is equivalent to a transformation equation for transformation of the coordinates (xp, yp) of the coordinate system Xp·Yp on the imaging surface S into the coordinates (x3, y3) of the bird's eye view coordinate system X3·Y3.

[Equation 5]

$$
\begin{bmatrix} xw \\ zw \end{bmatrix} = \frac{H}{f} \begin{bmatrix} x3 \\ y3 \end{bmatrix}
$$

[Equation 6]

$$
\begin{bmatrix} xp \\ yp \end{bmatrix} = \begin{bmatrix} \dfrac{fHx3}{fh\sin\theta + Hy3\cos\theta} \\ \dfrac{f(fh\cos\theta - Hy3\sin\theta)}{fh\sin\theta + Hy3\cos\theta} \end{bmatrix}
$$

[Equation 7]

$$
\begin{bmatrix} x3 \\ y3 \end{bmatrix} = \begin{bmatrix} \dfrac{xp(fh\sin\theta + Hy3\cos\theta)}{fH} \\ \dfrac{fh(f\cos\theta - yp\sin\theta)}{H(f\sin\theta + yp\cos\theta)} \end{bmatrix}
$$

The coordinates (xp, yp) of the coordinate system Xp·Yp on the imaging surface S represent the coordinates of the object scene image P_3 captured by the camera C_3. Therefore, the object scene image P_3 from the camera C_3 is transformed into the bird's eye view image BEV_3 by using Equation 7. In reality, the object scene image P_3 firstly undergoes an image process, such as a lens distortion correction, and is then transformed into the bird's eye view image BEV_3 using Equation 7.

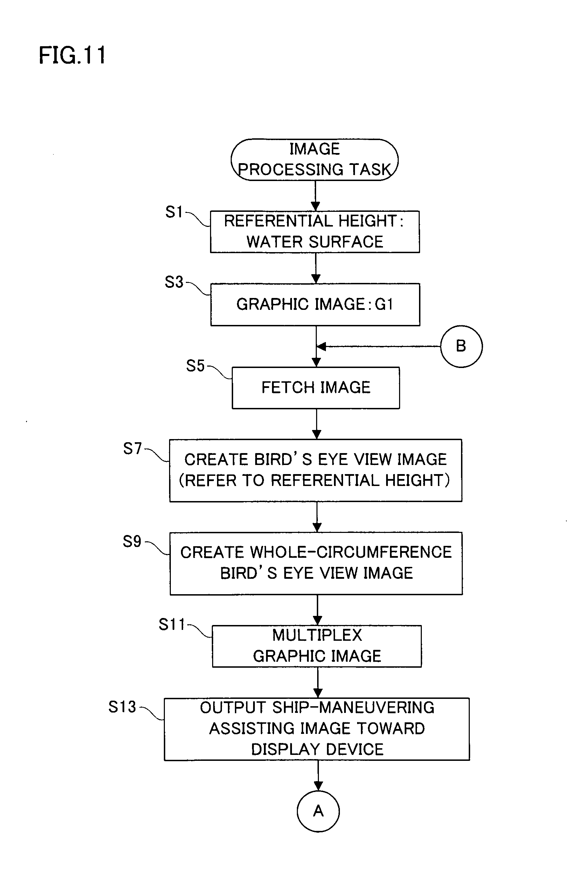

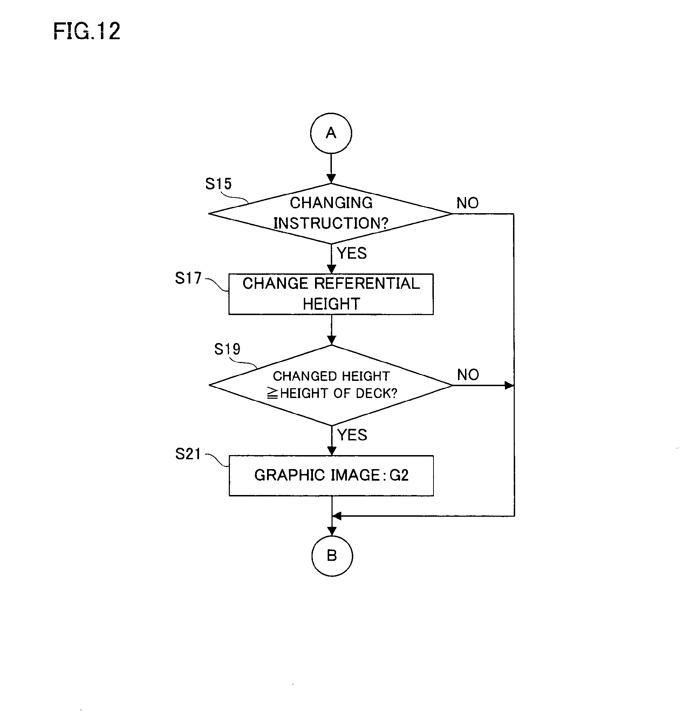

The CPU 12p specifically executes a plurality of tasks in parallel, including an image processing task shown in Figure 11 and 12. It is noted that a control program corresponding to these tasks is stored in a flash memory 14 (see Figure 1).

Firstly, in a step S1, the referential height is set to the height of the water surface WS, and the graphic image to be multiplexed is set to the "G1" in a step S3. In a step S5, the object scene images P_1 to P_4 are fetched from the cameras C_1 to C_4, respectively, and in a step S7, the bird's eye view images BEV_1 to BEV_4 are created on the basis of the fetched object scene images P_1 to P_4. In the processing in the step S7, the referential height designated in the step S 1 or in a step S 17 described later is referred. The created bird's eye view images BEV_1 to BEV_4 are secured in the work area W1.

In a step S9, the bird's eye view images BEV_1 to BEV_4 created in the step S7 are combined together to create a whole-circumference bird's eye view image, and the created whole-circumference bird's eye view image is secured in the work area W2. In a step S 11, the graphic image selected in the step S 1 or in a step S21 described later is multiplexed onto the center of the whole-circumference bird's eye view image secured in the work area W2. In a step S 13, a part of the whole-circumference bird's eye view image onto which the graphic image is multiplexed is cut out from the work area W2, and the cut-out image is outputted toward the display device 16 as a ship-maneuvering assisting image.

In a step S 15, it is determined whether or not a height changing instruction is issued, and if "NO", the process returns to the step S5 as it is whereas if "YES", the referential height is changed according to the height changing instruction in a step S 17. In a step S 19, it is determined whether or not the changed referential height is equal to or more than the height of the deck DCK1. If "NO", the process returns to the step S5 as it is whereas if "YES", the graphic image to be multiplexed is changed to the "G2" in a step S21, and then, the process returns to the step S5.

As understood from the above-description, each of the cameras C_1 to C_4 is installed at a different position of the navigation bridge 106 so as to have the visual field spanning the deck DCK1 and the water surface WS. The CPU 12p combines the object scene images P_1 to P_4 respectively outputted from the cameras C_1 to C_4 together with reference to the referential height (S7, S9). The ship 100 has a width that decreases with an increase in height, and the CPU 12p multiplexes the graphic image (the graphic image of the ship 100) corresponding to the height larger than the referential height onto the whole-circumference bird's eye view image created by the combining processing (S3, S11, S21). The CPU 12p further outputs a part of the whole-circumference bird's eye view image onto which the graphic image is multiplexed to the display device 16 as a ship-maneuvering assisting image (S13). The CPU 12p changes the magnitude of the referential height in response to the height changing instruction (S 17).

Since the cameras C_1 to C_4 are installed in the positions different from one another, when the quality of the combined image representing the object existing at the referential height is emphasized, the quality of the combined image representing the object existing at a height different from the referential height is decreased.

However, in this embodiment, the magnitude of the referential height is changed in response to the height changing instruction, so that the referential height is conformed to a notable plane where the object exists, to thereby avoid the deterioration in quality of the combined image representing the notable plane. That is, the magnitude of the referential height is made changeable, and whereby the quality of the combined image representing the object scene captured by the visual field spanning the deck DCK1 and the water surface WS is adoptively improved.

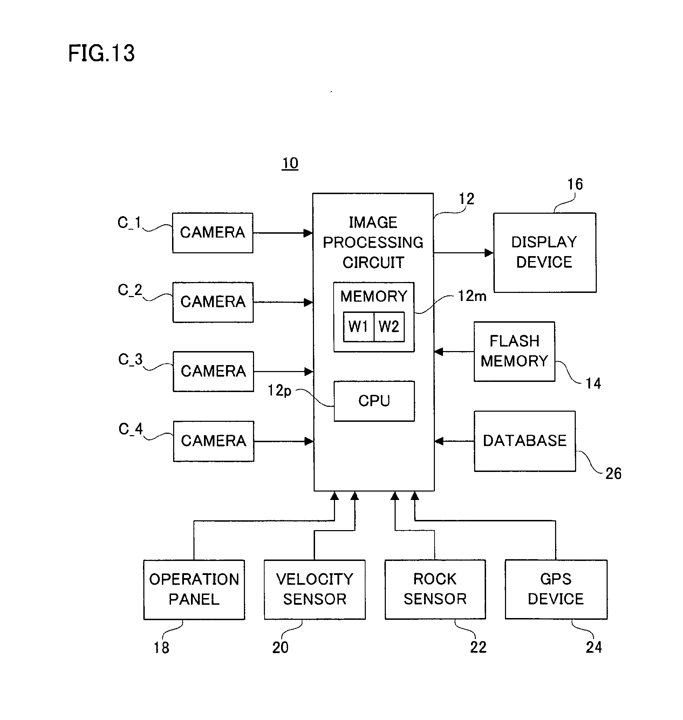

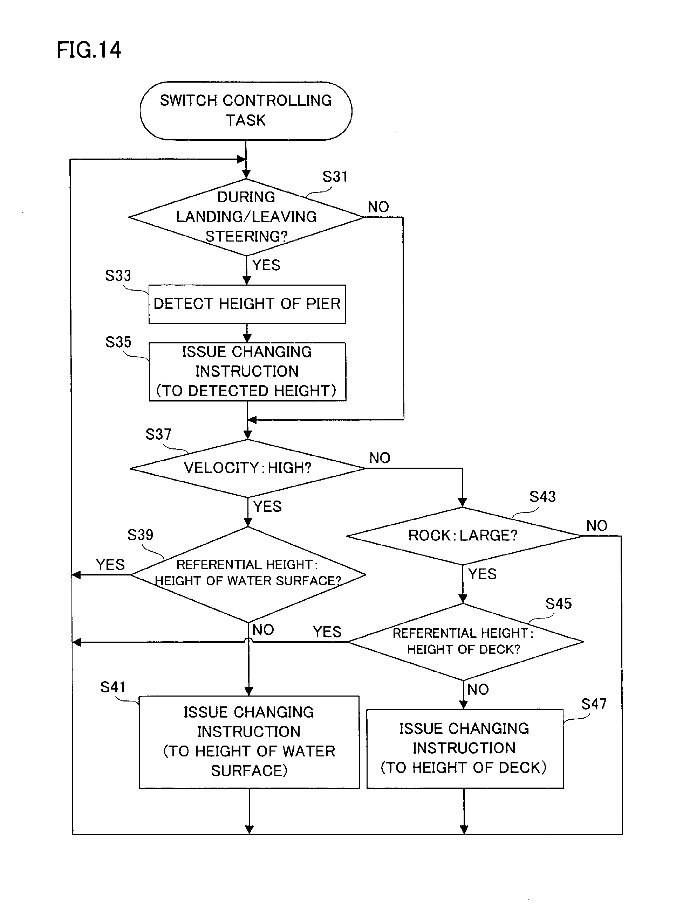

Here, in this embodiment, the height changing instruction is issued according to an operation with the operation panel 18, and the referential height is changed according to the height changing instruction thus issued. However, it may be possible that a velocity sensor 20 for sensing a moving velocity of the ship 100, a rock sensor 22 for sensing a rock of the ship 100, a GPS device 24 for detecting a present location of the ship 100 and a database DB storing map information including the height may be added as shown in Figure 13, and the height changing instruction may be additionally issued on the basis of the output from the velocity sensor 20, the rock sensor 22 or the GPS device 24. In this case, the CPU 12p further executes a switch controlling task as shown in Figure 14.

Firstly, in a step S31, it is determined whether the ship 100 is steering for landing or leaving on the basis of outputs from the GPS device 24 and the velocity sensor 20. If "NO" here, the process proceeds to a step S37 as it is whereas if "YES", the process proceeds to the step S37 through steps S33 to S35. In the step S33, the height of the pier LP is detected on the basis of an output from the GPS device 24 and the map information stored in the database DB. Furthermore, in the step S35, the height changing instruction onto which the detected height of the pier LP is described is issued.

In the step S37, it is determined whether or not the moving velocity of the ship 100 sensed by the velocity sensor 20 is a high (whether or not the moving velocity is above a reference). In a step S43, it is determined whether or not the rock of the ship 100 detected by the rock sensor 22 is large (whether or not the rock is above a reference).

If "YES" in the step S37, it is determined whether or not the current referential height is equivalent to the height of the water surface WS in a step S39. If "YES" here, the process returns to the step S31 as it is whereas if "NO", the height changing instruction onto which the height of the water surface WS is described is issued in a step S41, and the process returns to the step S31.

If "YES" in the step S43, it is determined whether or not the current referential height is equivalent to the height of the deck DCK1 in a step S45. If "YES" here, the process returns to the step S31 as it is whereas if "NO", the height changing instruction onto which the height of the deck DCK1 is described is issued in a step S47, and the process returns to the step S31. Here, if "NO" in both of the steps S37 and S43, the process returns to the step S31.

Thus, during steering for landing or for leaving, the graphic image G1 is multiplexed onto the center of the whole-circumference bird's eye view image created by taking the pier LP as a referential height. Furthermore, during moving at high speeds, the graphic image G1 is multiplexed onto the center of the whole-circumference bird's eye view image created by taking the water surface WS as a referential height. Furthermore, when rocks occurs during stopping or moving at low speeds, the graphic image G2 is multiplexed onto the center of the whole-circumference bird's eye view image created by taking the deck DCK1 as referential height. Thus, the maneuverability is improved.

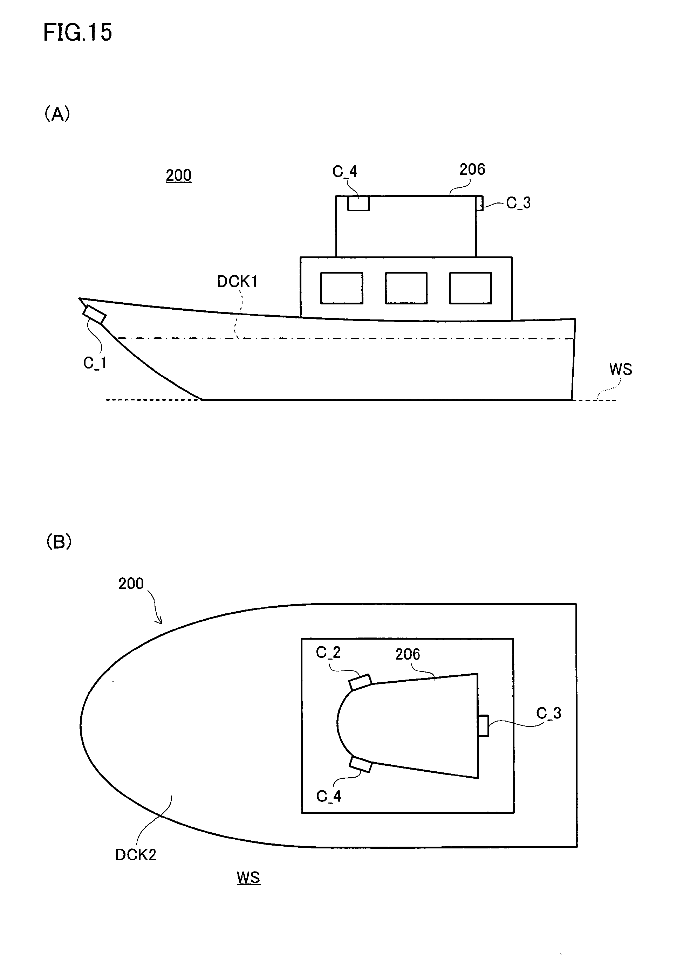

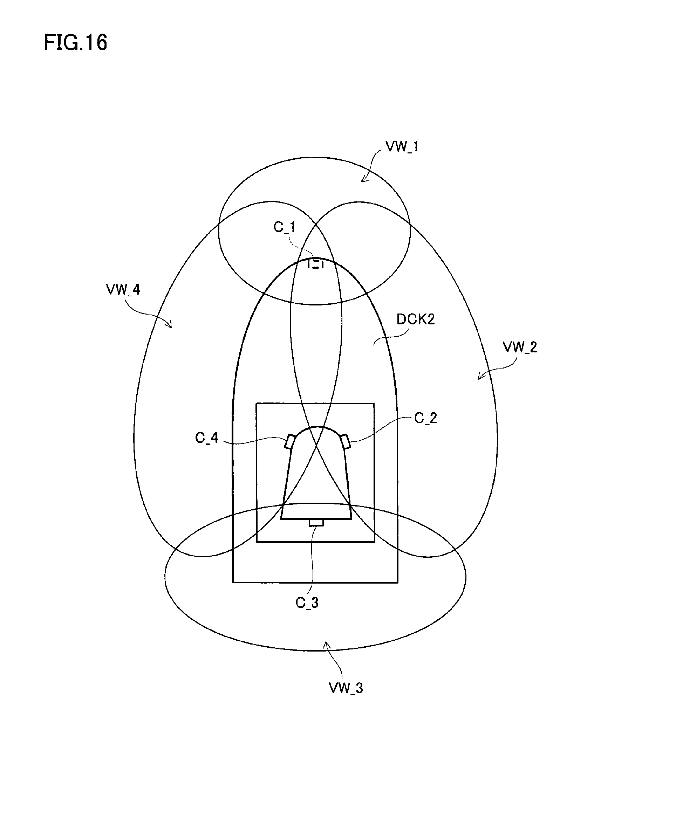

Additionally, in the embodiments shown in Figure 1 to Figure 12, the cameras C_1 to C_4 are installed at the upper end center of the navigation bridge 106. However, a ship 200 shown in Figure 15(A) to Figure 15(B) is prepared, and the camera C_1 may be installed at a bow in an obliquely downward, the camera C_2 may be installed at a forward right of the navigation bridge 206 obliquely downward, the camera C_3 may be installed at a reward of the navigation bridge 206 obliquely downward, and the camera C_4 may be installed at a forward left of the navigation bridge 206 obliquely downward. In this case, the visual fields VW_1 to VW_4 range as in a manner shown in Figure 16.

By installing the camera C_1 at the bow, it is possible to prevent a blind spot below the bow from being caused. Furthermore, by respectively installing the cameras C_2 and C_4 at the obliquely forward right and the obliquely forward left of the navigation bridge 206, it is possible to capture a deck DCK2 without omission.

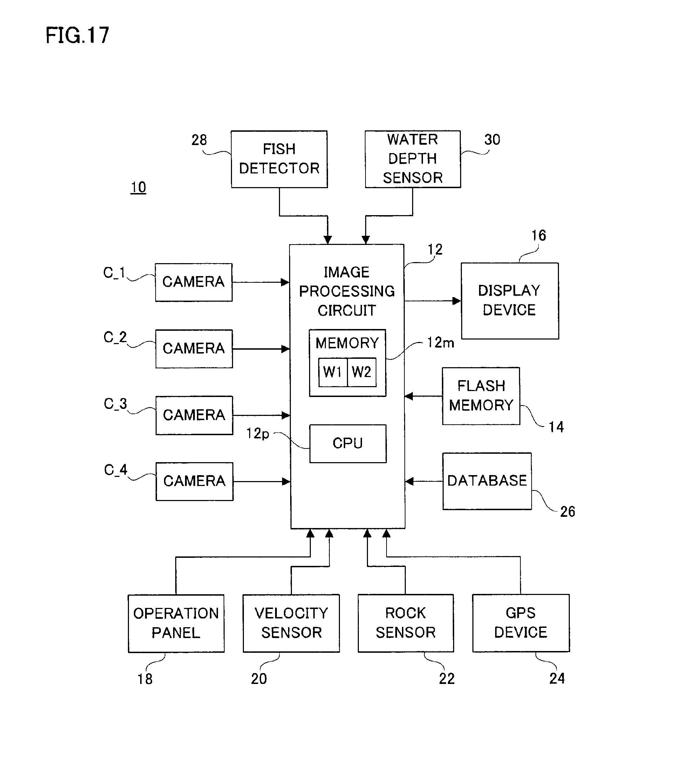

In addition, in this embodiment, a graphic image G1 or G2 which imitates the ship 100 is multiplexed onto a whole-circumference bird's eye view image. However, as shown in Figure 17, ambient surrounding information, such as signs-of-fish information created by a fish detector 28 and water depth information sensed by a water depth sensor 30 are additionally fetched, and the image based on the fetched ambient surrounding information may be multiplexed onto the whole-circumference bird's eye view image.

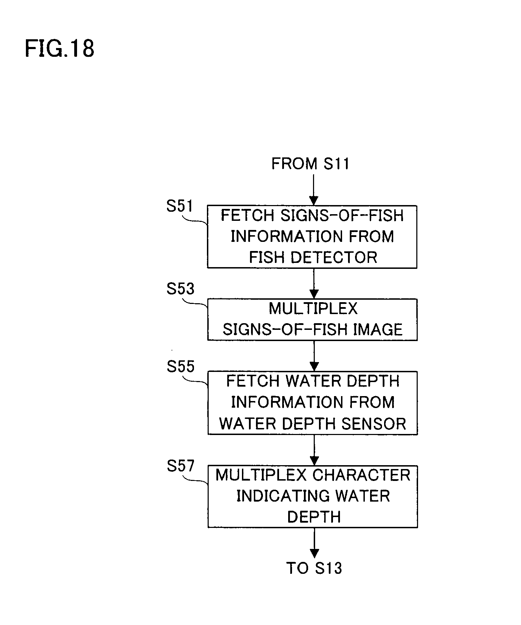

In this case, it is preferable that the CPU 12p additionally executes processing in steps S51 to S57 shown in Figure 18 in the image processing task. After completion of the processing in the step S 11, in the step S51, signs-of-fish information is fetched from the fish detector 28, and a signs-of-fish image based on the fetched signs-of-fish information is multiplexed onto the whole-circumference bird's eye view image in the step S53. Succeedingly, in the step S55, water depth information is fetched from the water depth sensor 30, and a character indicating the water depth is multiplexed onto the whole-circumference bird's eye view image in the step S57. After completion of the processing in the step S57, the process proceeds to the step S13. Adding these processing enhances entertainment.

Notes relating to the above-described embodiment will be shown below. It is possible to arbitrarily combine these notes with the above-described embodiment unless any contradiction occurs.

The coordinate transformation for producing a bird's eye view image from a photographed image, which is described in the embodiment, is generally called a perspective projection transformation. Instead of using this perspective projection transformation, the bird's eye view image may also be optionally produced from the photographed image through a well-known planer projection transformation. When the planer projection transformation is used, a homography matrix (coordinate transformation matrix) for transforming a coordinate value of each pixel on the photographed image into a coordinate value of each pixel on the bird's eye view image is evaluated at a stage of camera calibrating processing. A method of evaluating the homography matrix is well known. Then, during image transformation, the photographed image may be transformed into the bird's eye view image based on the homography matrix. In either way, the photographed image is transformed into the bird's eye view image by projecting the photographed image on the bird's eye view image.

Although the present invention has been described and illustrated in detail, it is clearly understood that the same is by way of illustration and example only and is not to be taken by way of limitation, the spirit and scope of the present invention being limited only by the terms of the appended claims.

## REFERENCE SIGNS LIST

10      ship-maneuvering assisting apparatus

C1~C4      camera

| 12 | image processing circuit |
|---|---|
| 12p | CPU |
| 12m | memory |
| 14 | flash memory |
| 16 | display device |
| 100, 200 | ship |

**Claims**

1. A maneuvering assisting apparatus, comprising:

   a plurality of cameras each of which is installed at a different position of an upper portion of a moving object so as to have a visual field spanning said moving object and an outside world;
   a combiner which combines a plurality of object scene images respectively outputted from said plurality of cameras with reference to a referential height;
   a displayer which performs display processing on a combined image created by said combiner; and
   a changer which changes a magnitude of said referential height in response to a height changing instruction.

2. A maneuvering assisting apparatus according to claim 1, wherein said moving object has a width that decreases with an increase in height, further comprising
   a multiplexer which multiplexes a graphic image of said moving obj ect corresponding to a height larger than said referential height onto the combined image created by said combiner, and
   said displayer executes said displaying processing after the multiplexing processing by said multiplexer.

3. A maneuvering assisting apparatus according to claim 1, wherein said combiner includes a transformer which transforms said plurality of object scene images into a plurality of bird's eye view images corresponding to said referential height.

4. A maneuvering assisting apparatus according to claim 3, wherein a visual field of each of said plurality of cameras has a common visual field, and said combiner further includes a connector which connects the plurality of bird's eye view images transformed by said transformer so as to be overlapped at said common visual fields.

5. A maneuvering assisting apparatus according to claim 1, further comprising:

   a first detector which detects at least one of a moving velocity of said moving object and a magnitude of a rock of said moving object; and
   a first issuer which issues said height changing instruction with reference to a detection result by said first detector.

6. A maneuvering assisting apparatus according to claim 1, wherein said moving object is equivalent to a ship, a visual field of each of said plurality of cameras spans a deck of said ship and a water surface, and said changer changes a magnitude of said referential height among a plurality of magnitudes including a magnitude corresponding to said deck and a magnitude corresponding to said water surface.

7. A maneuvering assisting apparatus according to claim 1, further comprising:

   a second detector which detects a height of a pier when said ship performs landing/leaving steering; and
   a second issuer which issues said height changing instruction with reference to a detection result by said second detector.

8. A maneuvering assisting program product to be executed by a processor of a maneuvering assisting apparatus having a plurality of cameras each of which is installed at a different position of an upper portion of a moving object so as to have a visual field spanning said moving object and an outside world, comprising:

a combining step of combining a plurality of object scene images respectively outputted from said plurality of cameras with reference to a referential height;

a displaying step of performing display processing on a combined image created by said combining step; and

a changing step of changing a magnitude of said referential height in response to a height changing instruction.

9. A maneuvering assisting method to be executed by a maneuvering assisting apparatus having a plurality of cameras each of which is installed at a different position of an upper portion of a moving object so as to have a visual field spanning said moving object and an outside world, comprising following:

a combining step of combining a plurality of object scene images respectively outputted from said plurality of cameras with reference to a referential height;

a displaying step of performing display processing on a combined image created by said combining step; and

a changing step of changing a magnitude of said referential height in response to a height changing instruction.

## FIG.1

## FIG.2

(A)

(B)

## FIG.3

(A)

(B)

FIG.4

FIG.5

(A) BIRD'S EYE VIEW IMAGE BEV_1

$$\longrightarrow X1$$

Y1

(B) BIRD'S EYE VIEW IMAGE BEV_2

$$\longrightarrow X2$$

Y2

(C) BIRD'S EYE VIEW IMAGE BEV_3

$$\longrightarrow X3$$

Y3

(D) BIRD'S EYE VIEW IMAGE BEV_4

$$\longrightarrow X4$$

Y4

## FIG.6

## FIG.7

(A)　　　　　　　　　　　　　　　　(B)

# FIG.8

(A) GRAPHIC IMAGE : G1
    REFERENTIAL HEIGHT : PIER

(B) GRAPHIC IMAGE : G1
    REFERENTIAL HEIGHT : PIER

(C) GRAPHIC IMAGE : G2
    REFERENTIAL HEIGHT : DECK

(D) GRAPHIC IMAGE : G2
    REFERENTIAL HEIGHT : DECK

HEIGHT : DECK＞PIER＞WATER SURFACE

FIG.9

FIG.10

# FIG.11

IMAGE PROCESSING TASK

S1 — REFERENTIAL HEIGHT: WATER SURFACE

S3 — GRAPHIC IMAGE: G1

B

S5 — FETCH IMAGE

S7 — CREATE BIRD'S EYE VIEW IMAGE (REFER TO REFERENTIAL HEIGHT)

S9 — CREATE WHOLE-CIRCUMFERENCE BIRD'S EYE VIEW IMAGE

S11 — MULTIPLEX GRAPHIC IMAGE

S13 — OUTPUT SHIP-MANEUVERING ASSISTING IMAGE TOWARD DISPLAY DEVICE

A

FIG.12

```
                        ┌───┐
                        │ A │
                        └───┘
                          │
                          ▼
 S15                  ╱─────────╲
        ╱─────────────  CHANGING   ─────────────╲  NO
        │             ╲INSTRUCTION?╱             │
        │              ╲─────────╱               │
        │                   │ YES                │
        │                   ▼                    │
 S17    │         ┌──────────────────┐           │
        │         │ CHANGE REFERENTIAL│          │
        │         │      HEIGHT       │          │
        │         └──────────────────┘           │
        │                   │                    │
        │                   ▼                    │
 S19                  ╱─────────╲                │
        ╱─────────────CHANGED HEIGHT─────────────╲  NO
                     ╲≧HEIGHT OF DECK?╱           │
                      ╲─────────╱                 │
                           │ YES                  │
                           ▼                      │
 S21              ┌──────────────────┐            │
                  │ GRAPHIC IMAGE:G2 │            │
                  └──────────────────┘            │
                           │                      │
                           ▼◄─────────────────────┘
                        ┌───┐
                        │ B │
                        └───┘
```

20

FIG.13

## FIG.14

```
        ┌─────────────────────┐
        │  SWITCH CONTROLLING │
        │        TASK         │
        └─────────────────────┘
                  │
                  ▼
              ╱───────────╲              S31
           ╱   DURING       ╲     NO
          ⟨ LANDING/LEAVING  ⟩──────────┐
           ╲  STEERING?     ╱           │
              ╲───────────╱             │
                  │ YES                 │
    S33           ▼                     │
        ┌─────────────────────┐         │
        │ DETECT HEIGHT OF PIER│        │
        └─────────────────────┘         │
    S35           │                     │
        ┌─────────────────────┐         │
        │  ISSUE CHANGING     │         │
        │  INSTRUCTION        │         │
        │ (TO DETECTED HEIGHT)│         │
        └─────────────────────┘         │
                  │◄────────────────────┘
    S37           ▼
              ╱───────────╲      NO
           ⟨ VELOCITY:HIGH? ⟩─────────────┐
              ╲───────────╱               │
                  │ YES                    │
    S39           ▼                        ▼            S43
       ╱──────────────────╲          ╱──────────────╲    NO
YES ⟨ REFERENTIAL HEIGHT:  ⟩       ⟨  ROCK:LARGE?    ⟩──────┐
◄──⟨ HEIGHT OF WATER SURFACE?⟩       ╲──────────────╱      │
       ╲──────────────────╱              │ YES             │
                  │ NO    YES             ▼          S45    │
                  │◄──────────────  ╱──────────────╲       │
                  │                ⟨ REFERENTIAL HEIGHT:⟩   │
                  │                ⟨  HEIGHT OF DECK?  ⟩    │
                  │                 ╲──────────────╱        │
    S41           ▼                     │ NO         S47    │
       ┌──────────────────┐    ┌──────────────────┐        │
       │  ISSUE CHANGING  │    │  ISSUE CHANGING  │        │
       │  INSTRUCTION     │    │  INSTRUCTION     │        │
       │ (TO HEIGHT OF WATER│  │ (TO HEIGHT OF DECK)│      │
       │    SURFACE)      │    │                  │        │
       └──────────────────┘    └──────────────────┘        │
                  │                     │                   │
                  ▼                     ▼                   ▼
```

# FIG.15

(A)

(B)

EP 2 196 388 A1

FIG.16

VW_1

C_1

VW_4

DCK2

VW_2

C_4

C_2

C_3

VW_3

24

FIG.17

FIG.18

FROM S11

S51   FETCH SIGNS-OF-FISH INFORMATION FROM FISH DETECTOR

S53   MULTIPLEX SIGNS-OF-FISH IMAGE

S55   FETCH WATER DEPTH INFORMATION FROM WATER DEPTH SENSOR

S57   MULTIPLEX CHARACTER INDICATING WATER DEPTH

TO S13

<div align="center"><b>INTERNATIONAL SEARCH REPORT</b></div>

| | International application No. |
|---|---|
| | PCT/JP2009/061677 |

**A. CLASSIFICATION OF SUBJECT MATTER**
B63B49/00(2006.01)i, G06T1/00(2006.01)i, G06T3/00(2006.01)i, H04N7/18
(2006.01)i

According to International Patent Classification (IPC) or to both national classification and IPC

**B. FIELDS SEARCHED**

Minimum documentation searched (classification system followed by classification symbols)
B63B49/00, G06T1/00, G06T3/00, H04N7/18

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Microfilm of the specification and drawings annexed to the request of Japanese Utility Model Application No. 73041/1990(Laid-open No. 31098/1992) (Kawasaki Heavy Industries, Ltd.), 12 March, 1992 (12.03.92), Full text; all drawings (Family: none) | 1–9 |
| A | JP 2003-158736 A (Matsushita Electric Industrial Co., Ltd.), 30 May, 2003 (30.05.03), Full text; all drawings & US 2003/0021490 A1 & EP 1303140 A1 & WO 2002/007443 A1 | 1–9 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 September, 2009 (03.09.09) | Date of mailing of the international search report<br>15 September, 2009 (15.09.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/061677 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-287892 A  (Sanyo Electric Co., Ltd.), 19 October, 2006 (19.10.06), Full text; all drawings & US 2006/0202984 A1    & EP 1701306 A1 | 1-9 |
| A | JP 2004-175187 A  (National Maritime Research Institute), 24 June, 2004 (24.06.04), Full text; all drawings (Family: none) | 1-9 |
| A | JP 2007-286725 A  (Toshima IMAZU), 01 November, 2007 (01.11.07), Full text; all drawings (Family: none) | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008048345 A